(19) Europäisches Patentamt

European Patent Office

Office européen des brevets

(11) Veröffentlichungsnummer : **0 330 830 B1**

(12) **EUROPÄISCHE PATENTSCHRIFT**

(45) Veröffentlichungstag der Patentschrift :
**13.05.92 Patentblatt 92/20**

(51) Int. Cl.⁵ : **B22F 5/00**

(21) Anmeldenummer : **89101083.7**

(22) Anmeldetag : **23.01.89**

(54) **Verfahren zur Herstellung pulvergeschmiedeter Bauteile.**

(30) Priorität : **27.02.88 DE 3806236**
**14.01.89 DE 3901019**

(43) Veröffentlichungstag der Anmeldung :
**06.09.89 Patentblatt 89/36**

(45) Bekanntmachung des Hinweises auf die
Patenterteilung :
**13.05.92 Patentblatt 92/20**

(84) Benannte Vertragsstaaten :
**AT BE CH DE ES FR GB GR IT LI LU NL SE**

(56) Entgegenhaltungen :
**EP-A- 0 167 320**
**GB-A- 1 367 462**
**US-A- 4 693 139**

(56) Entgegenhaltungen :
**PATENT ABSTRACTS OF JAPAN, Band 5, Nr.
29 (M-56)[701] 21. Februar 1981; & JP-A-55 154
505 (KIYOUWA GOUKIN K.K) 02-12-1980**
**PATENT ABSTRACTS OF JAPAN, Band 7, Nr.
257 (M-256)[1402], 16. November 1983; & JP-
A-58 141 301 (TOYOTA JIDOSHA KOGYOK.K.)
22-08-1983**

(73) Patentinhaber : **Sintermetallwerk Krebsöge
GmbH
Krebsöge 10
W-5608 Radevormwald (DE)**

(72) Erfinder : **Weber, Manfred, Dr.Dipl.-Ing.
Gerberstrasse 27a
W-5810 Witten 3 (DE)**

(74) Vertreter : **Maxton, Alfred et al
Patentanwälte Maxton Maxton Langmaack
Goltsteinstrasse 93 VII Postfach 51 08 06
W-5000 Köln 51 (DE)**

EP 0 330 830 B1

## Beschreibung

Die Erfindung betrifft ein Verfahren zur Herstellung pulvergeschmiedeter metallischer Bauteile, die aus zumindest zwei Einzelteilen bestehen, wobei das Bauteil von einer einteiligen Vorform zur Endform aus Pulver gepreßt, gesintert, geschmiedet, abgekühlt und in seine Einzelteile getrennt wird.

Ein derartiges Verfahren wird beispielsweise angewandt, wenn ein Bauteil hergestellt werden soll, das aus zumindest zwei einander zugeordneten Einzelteilen besteht. Insbesondere kann es sich dabei um Einzelteile handeln, die zueinander passungsgenau ausgeführt sein müssen. Ein derartiger Fall liegt z. B. bei einem Pleuel mit geteiltem Pleuelkopf vor. Ein solches Pleuel besteht aus dem Lagerdeckel und dem übrigen Pleuel, wobei diese beiden Einzelteile durch Pleuelschrauben miteinander verbunden werden.

Es ist ein Verfahren der eingangs genannten Gattung bekannt, bei dem die Vorform mit Aufmaß aus Pulver gepreßt wird. Dabei wird im Bereich der zukünftigen Trennfuge zwischen zwei benachbarten Einzelteilen ein zusätzliches Aufmaß vorgesehen. Nach dem Sintern, Schmieden und Abkühlen folgt die Trennung des Bauteiles in seine Einzelteile. Dies geschieht durch mechanische Bearbeitung dadurch, daß die Einzelteile in der Trennfuge durch Sägen voneinander getrennt werden. Das zusätzliche Aufmaß in diesem Bereich wird durch Sägen weitgehend beseitigt. Anschließend ist es notwendig, die beiden Trennflächen der benachbarten Einzelteile mechanisch zu bearbeiten. Je nach Bedarf ist es dabei erforderlich, eine passungsgenaue Bearbeitung folgen zu lassen, beispielsweise durch Schleifen.

Dieses Verfahren erfordert durch das zusätzliche Aufmaß im Bereich der Trennfuge den Einsatz von Werkstoff, der später beim Sägen beseitigt wird. Die Bearbeitung des Sägens und der weiteren mechanischen Nachbearbeitung, nicht zuletzt eines etwa erforderlichen Schleifens, verlangt einen erheblichen Aufwand an Zeit und Kosten. Da sich eine unzureichende mechanische Bearbeitung nicht vollständig ausschließen läßt, ist Ausschuß unvermeidlich. Alle diese Nachteile wiegen besonders schwer, wenn es sich bei der Herstellung um eine Massenproduktion handelt.

Der Erfindung liegt die Aufgabe zugrunde, die vorstehend dargelegten Nachteile zu beseitigen, das eingangs genannte Verfahren erheblich zu vereinfachen und gleichzeitig eine passungsgenaue Herstellung der Einzelteile zu ermöglichen.

Diese Aufgabe wird gemäß der Erfindung dadurch gelöst, daß die Vorform vor dem Sintern an der Trennstelle zwischen zwei Einzelteilen mit zumindest einer Anrißkerbe versehen wird, die zwischen Sintern und Schmieden eine Schutzschicht, insbesondere eine Oxidschicht, erhält und beim Schmieden zur Endform geschlossen wird, worauf das Bauteil nach dem Abkühlen durch Bruch in seine Einzelteile getrennt wird.

Bei dem Verfahren gemäß der Erfindung weist die Vorform in den Dickenabmessungen ein Aufmaß gegenüber der Endform auf. Die Endform wird beim Schmieden erreicht. Dabei wird die Anrißkerbe der Vorform geschlossen. Dies hat zur Folge, daß zwei, vorzugsweise dünne Schutzschichten, insbesondere Oxidschichten, benachbart werden und so für eine Trennung sorgen, die als von der Anrißkerbe ausgehender Riß besteht. Der auf diese Weise hergestellte Riß kann sowohl in seiner Länge als auch in seiner Breite durch die Gestaltung der Anrißkerbe vorbestimmt werden. Nach dem Abkühlen des Bauteils wird die Trennung in seine Einzelteile durch Bruch längs des Risses erreicht.

Die Lösung der Aufgabe gemäß der Erfindung kann dadurch noch verbessert werden, daß außerdem im Bereich der gewünschten Trennfläche und im Abstand von der Anrißkerbe zumindest eine Rißverlaufskerbe vorgesehen wird. Der vorhandene Riß führt mit erheblicher Wahrscheinlichkeit dazu, daß nach dem Abkühlen des Bauteils dessen Trennung in seine Einzelteile durch Bruch längs dieses Risses und in Fortsetzung desselben erreicht wird. Diese weitere Kerbe führt dazu, daß die Trennung von der Trennstelle aus in der Trennfläche sozusagen von einer Kerbe zur anderen verläuft.

Dadurch ist die Lage der Trennfläche eindeutig bestimmbar. Der Verlauf des Risses während der Trennung, und damit die Richtung seiner Ausbreitung, kann also durch die Anordnung der Rißverlaufskerbe vorgegeben werden. Hinzu kommt, daß für die Trennung weniger Arbeit aufgewandt werden muß und die Wahrscheinlichkeit vermindert wird, daß beim Trennen in den Trennflächen Verformungen auftreten.

Bei einer solchen Trennung des Bauteils wird kein Werkstoff durch mechanische Bearbeitung verbraucht. Es entsteht eine Trennfläche, die keiner Bearbeitung bedarf, da sie passungsgenau ist. Ohne weiteres können zwei benachbarte Einzelteile an ihren Trennflächen wieder passend zusammengesetzt werden. Diese Trennflächen weisen gegenüber bekannten mechanisch bearbeiteten den wesentlichen Vorteil auf, daß ihre Oberfläche um ein Vielfaches größer ist. Eine höhere Belastbarkeit des Bauteils wird dadurch geboten. Beachtlich sind weiterhin die Ersparnis von Zeit- und Kostenaufwand, da das Trennen durch Bruch mit wesentlich einfacheren Mitteln durchführbar ist als das bekannte Trennen durch mechanische Bearbeitung.

Das Verfahren kann gemäß der Erfindung dadurch ausgestaltet werden, daß die Vorform beim Pressen mit zumindest einer Anriß- und einer Rißverlaufskerbe versehen wird. Hierzu kann beispielsweise im Preßwerkzeug die erforderliche Form vorgesehen werden.

In weiterer Ausgestaltung der Erfindung kann die Vorform aber auch durch mechanische Bearbeitung mit zumindest einer Anriß- und Rißverlaufskerbe versehen werden. Dies ist beispielsweise durch Fräsen oder Stoßen möglich. Je nach dem herzustellenden Bauteil werden eine oder mehrere Anriß- und Rißverlaufskerben an den zur Trennung geeigneten Stellen angebracht.

Voteilhaft wird die Vorform vor dem Sintern ausgewogen. Dies ist erforderlich, wenn vorgegebene Toleranzen der Sektionsgewichte eingehalten werden müssen.

Ein dem Pulver beigegebenes Gleitmittel kann anschließend ausgebrannt werden. Sodann kann die Sinterung unter Schutzgas erfolgen.

Vorzugsweise erhält die Anrißkerbe ihre Schutzschicht dadurch, daß die Vorform mit der Anrißkerbe nach dem Sintern zum Schmieden durch die Luftatmosphäre verbracht wird. Diese verhältnismäßig kurze Zeit genügt, um eine dünne Oxidschicht entstehen zu lassen. Das Bauteil kühlt dabei kaum ab, so daß es in weiterer Ausgestaltung der Erfindung möglich ist, die Vorform mit Sinterhitze zu schmieden.

Beim Schmieden kann die Anrißkerbe dann vorzugsweise vollständig geschlossen werden, so daß sie dann als Form nicht mehr besteht. Von ihr ausgehend wird aber beim Schmieden, wie vorstehend beschrieben, längs ihrer Schutzschicht, insbesondere Oxidchicht, ein in Länge und Lage definierter Riß in der Trennstelle erzeugt. Dabei bewirken die beiden einander gegenüberliegenden Schutzschichten, insbesondere Oxidschichten, daß zwischen ihnen die Trennung aufrechterhalten bleibt.

An das Schmieden kann sich das Abkühlen dadurch anschließen, daß das Bauteil durch Luft, Öl oder Schutzgas abgekühlt wird. Dann kann in weiterer Ausgestaltung der Erfindung zwischen zwei benachbarten Einzelteilen eine Trennfläche durch Bruch erzeugt werden. Hierzu können Zug-, Druck- und/oder Biegebeanspruchungen aufgebracht werden. Diese greifen an geeigneten Stellen des Bauteiles an. Wenn in weiterer Ausgestaltung der Erfindung die Temperatur des Bauteils beim Trennen niedriger als die Raumtemperatur oder ihr höchsten gleich gehalten wird, kann das Trennen dadurch verbessert werden, da die Wahrscheinlichkeit von Verformungsbrüchen vermindert wird. Das Bruchverhalten wird spröder.

Gemäß einer bevorzugten Ausgestaltung der Erfindung wird nicht die Temperatur des Bauteils insgesamt beim Trennen niedriger als die Raumtemperatur gehalten, sondern das Bauteil wird lediglich an der gewünschten Trennfläche vor dem Trennen zumindest teilweise gekühlt. Dies erfordert einen wesentlich geringeren Aufwand zur Kühlung, als wenn das Bauteil vollständig gekühlt wird. Es entsteht dann auch nicht unerwünschtes Kondenswasser.

Die partielle Kühlung im Bereich der gewünschten Trennfläche hat zur Folge, daß dort die Kerbschlagzähigkeit vermindert wird, so daß eine geringere Verformungsarbeit aufgebracht werden muß. Da metallische Bauteile eine verhältnismäßig hohe Wärmeleitfähigkeit besitzen, tritt die Kühlung auch rasch in den gewünschten Bereichen ein. Dadurch werden Verformungsbrüche vermieden und Sprödbrüche ermöglicht.

Ein günstiges Bruchverhalten kann aber auch dadurch erreicht werden, daß die Trennung mit hoher Geschwindigkeit erfolgt.

Insbesondere betrifft die Erfindung ein Verfahren zur Herstellung eines Pleuels mit geteiltem Pleuelkopf. Dieses Bauteil besteht nach seiner Fertigstellung aus zwei Einzelteilen, nämlich dem Lagerdeckel und dem übrigen Pleuel. Nachdem das Bauteil gepreßt, gesintert, geschmiedet und abgekühlt worden ist, werden gemäß der Erfindung im Pleuelkopf die Löcher für die Pleuelschrauben angefertigt, sodann die Pleuelschrauben und Pleuelmuttern lose in den Löchern montiert und anschließend die Trennfläche in der Trennfuge des Pleuelkopfes durch Bruchtrennung erzeugt. Die lose Montage der Pleuelschrauben und Pleuelmuttern muß so bemessen sein, daß genügend Trennweg gegeben ist, um beide Einzelteile voneinander zu trennen. Die Montage hat den Vorteil, daß beide Einzelteile nach dem Trennen einander zugeordnet bleiben. Dadurch ist ein Vertauschen von Lagerdeckeln und übrigen Pleueln, die nicht zueinander gehören, ausgeschlossen.

Die Trennung der Einzelteile voneinander kann dadurch erfolgen, daß in den Pleuelkopf ein Trennwerkzeug eingeführt wird. Hierbei kann es sich beispielsweise um einen Spreizkopf, eine Keilvorrichtung od. dgl. handeln.

Gemäß einer bevorzugten Ausgestaltung der Erfindung werden die Rißverlaufskerben bei der Herstellung der Löcher für die Pleuelschrauben an den Wandungen der Löcher in der Trennfuge des Pleuelkopfes ausgebildet. Insbesondere können die Rißverlaufskerben als Ringnut entweder während des Bohrens der Löcher für die Pleuelschrauben hergestellt werden oder im Anschluß an das Bohren. Auch ist es möglich, die Anfertigung der Rißverlaufskerben gleichzeitig oder nach dem Schneiden der Gewinde für die Pleuelschrauben vorzusehen.

Wenn gemäß einer bevorzugten Ausgestaltung der Erfindung die gewünschte Trennfläche vor dem Trennen zumindest teilweise gekühlt wird, kann dies dadurch erfolgen, daß die Außenseiten der gewünschten Trennfläche zumindest teilweise einem strömungsfähigen Kühlmittel ausgesetzt werden. Insbesondere kann die gewünschte Trennfläche mit einem flüssigen Gas, vorzugsweise Stickstoff, beaufschlagt werden. Dies kann dadurch erfolgen, daß die Außenseiten der Trennfläche linienförmig und feindosiert mit Kühlmittel besprüht

3

werden.

Unabhängig davon, ob für das Trennen eine Kühlung vorgesehen wird, kann die Trennung gemäß der Erfindung auch dadurch erfolgen, daß eine Trennvorrichtung in die Löcher der Pleuelschrauben eingeführt wird. Statt der Einführung eines Trennwerkzeuges in den Pleuelkopf wird vorzugsweise von beiden Löchern der Pleuelschrauben her die Trennung eingeleitet. Hierzu können unterschiedliche Trennvorrichtungen verwandt werden, die in geeigneter Weise in den Löchern angeordnet und/oder befestigt werden. Auch diese Maßnahme hat zur Folge, daß die Gefahr einer Verformung der Trennfläche beim Trennen vermindert wird. Ebenso wie durch das Kühlen wird die Passungsgenauigkeit der Trennflächen noch besser erhalten, so daß die anschließende Zusmmensetzung der Einzelteile an ihren Trennflächen unverändert möglich ist.

An das Trennen kann sich in weiterer Ausgestaltung der Erfindung die spanende Nachbearbeitung des Pleuels anschließen, insbesondere des Lagers des Pleuelkopfes und des Pleuelauges. Vor der spanenden Nachbearbeitung des Pleuelkopfes können dann Pleuelschrauben und Pleuelmuttern fest montiert werden.

Im folgenden werden Einzelheiten eines Beispiels für ein Verfahren gemäß der Erfindung zur Herstellung eines Pleuels mit geteiltem Pleuelkopf näher beschrieben. Gepreßt wird ein fertiglegiertes Eisenpulver mit etwa 0,1 bis 0,5 % Mn, 0,1 bis 0,5 % Mo, 0,2 bis 2,2 % Ni und 0,3 bis 1,0 % C. Dabei wird die Vorform mit ± 0,6 % Gewichtstoleranz hergestellt. Die Anrißkerbe wird an der Trennfuge zwischen Lagerdeckel und übrigem Pleuel angebracht. Es wird eine Dichte von etwa 6,0 bis 7,0 g/cm³ erreicht. Nach dem Pressen folgt eine Kontrolle der Sektionsgewichte von Pleuelkopf und Pleuelauge sowie des Pleuels insgesamt. Die Vorform des Pleuels wird im Sinterschmiedeofen kurzgesintert. Dieser Ofen besitzt eine Zone zum Ausbrennen des Gleitmittels und eine weitere Zone zum Sintern, jedoch keine Zone zum Abkühlen. In dem Ofen wird die Vorform innerhalb etwa einer halben Stunde unter einer üblichen Schutzgas-Atmosphäre auf eine Sintertemperatur von 800 bis 1.200° C gebracht. Die gesinterte Vorform wird der Sinterhitze unmittelbar entnommen und dann in einem geschlossenen Werkzeug heiß nachverdichtet. Während die Vorform beim Pressen bereits die Abmessungen des Pleuels mit Dickenaufmaß erhalten hatte, wird das Pleuel beim Schmieden auf die Endform nachverdichtet. Die in die Vorform eingebrachten beiden Anrißkerben an der Trennfuge zwischen Lagerdeckel und übrigem Pleuel, die sich innerhalb des Pleuelkopfes befinden, werden beim Schmieden unter Bildung je eines Risses geschlossen. Dabei wird ein hochfestes Bauteil mit Dichten erzielt, die größer als 7,6 g/cm³ sind.

Einige Ausführungsbeispiele eines Pleuels, die nach dem Verfahren gemäß der Erfindung hergestellt worden sind, sind in der Zeichnung dargestellt und werden im folgenden näher beschrieben. Es zeigen

Fig. 1 eine Vorform eines Pleuels gemäß der Erfindung mit der Einzelheit A,

Fig. 2 die Endform des Pleuels gem. Fig. 1 mit der Einzelheit B,

Fig. 3 das Pleuel gem. Fig. 2 mit getrennten Einzelteilen und der Einzelheit C,

Fig. 4 einen Pleuelkopf mit Rißverlaufskerbe, teilweise im Schnitt,

Fig. 5 einen Schnitt gem. der Linie V-V der Fig. 4

Fig. 6 einen Pleuelkopf mit Kühlvorrichtung in der Draufsicht und

Fig. 7 den Pleuelkopf gem. Fig. 6 in der Ansicht.

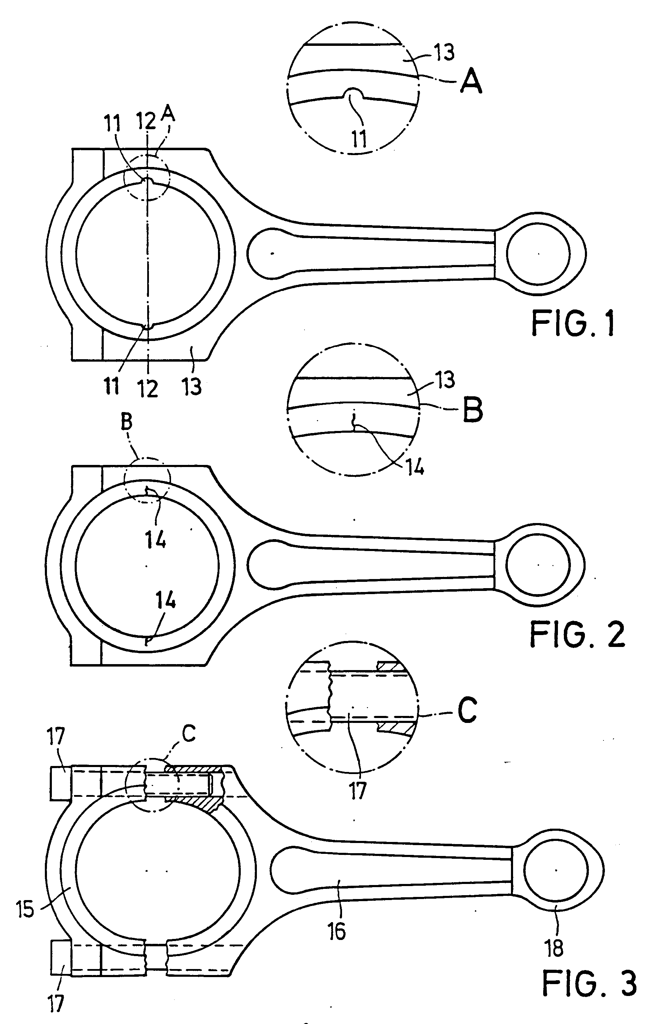

Aus Fig. 1 ist ersichtlich, daß zwei Anrißkerben 11 in der Trennfuge 12 des Pleuelkopfes 13 angebracht worden sind. Das Dickenaufmaß der Vorform gegenüber der Endform gem. Fig. 2 ist in Fig. 1 nicht dargestellt.

Fig. 2 zeigt, daß die Anrißkerben 11 (Fig. 1) durch das Schmieden geschlossen worden sind und zu zwei Rissen 14 geführt haben.

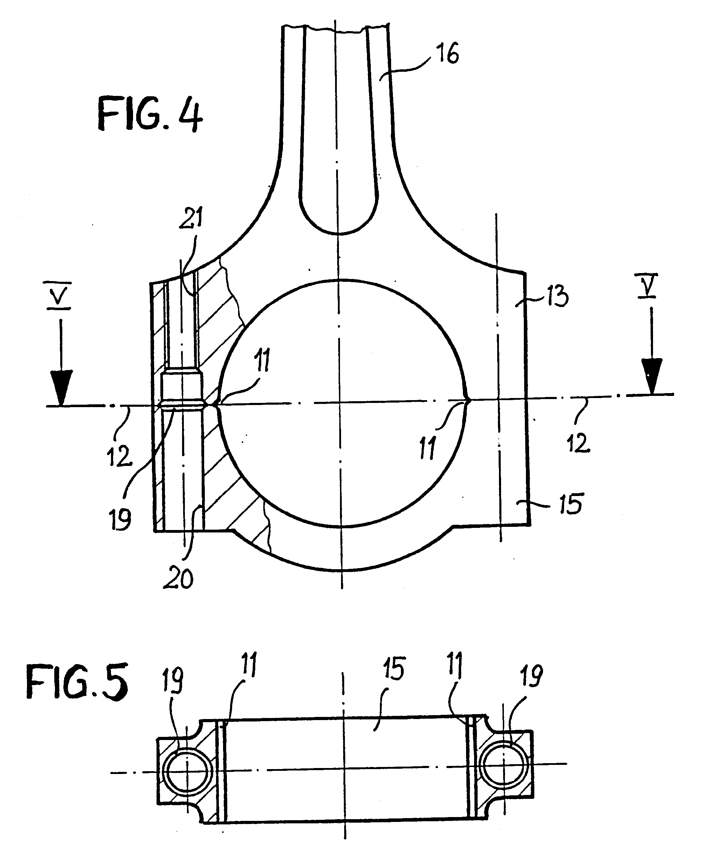

In Fig. 3 sind der Lagerdeckel 15 und das übrige Pleuel als getrennte Einzelteile dargestellt. Diese beiden Einzelteile sind über die beiden Pleuelschrauben 17 und die nicht dargestellten Pleuelmuttern lose miteinander verbunden. Zur spanenden Nachbearbeitung des Pleuelkopfes 13 wird der Lagerdeckel 15 mit dem übrigen Pleuel 16 durch die Pleuelschrauben 17 und die nicht dargestellten Pleuelmuttern fest verbunden. Die spanende Nachbearbeitung des Pleuelauges 18 erfolgt zweckmäßig gleichzeitig mit derjenigen des Pleuelkopfes 13.

Außer den beiden Anrißkerben 11 sind in der Trennfuge 12 zwischen dem Pleuelkopf 13 und dem Lagerdeckel 15 zwei Rißverlaufskerben 19 ausgebildet. Diese sind bei der Herstellung eines Loches 20 für die nicht dargestellten Pleuelschrauben 17 ausgebildet worden. Dabei weisen die Rißverlaufskerben 19 die Form einer Ringnut auf. Die Rißverlaufskerbe 19 kann aber auch beim oder nach dem Schneiden eines Gewindes 21 für die nicht dargestellten Pleuelschrauben 17 hergestellt werden.

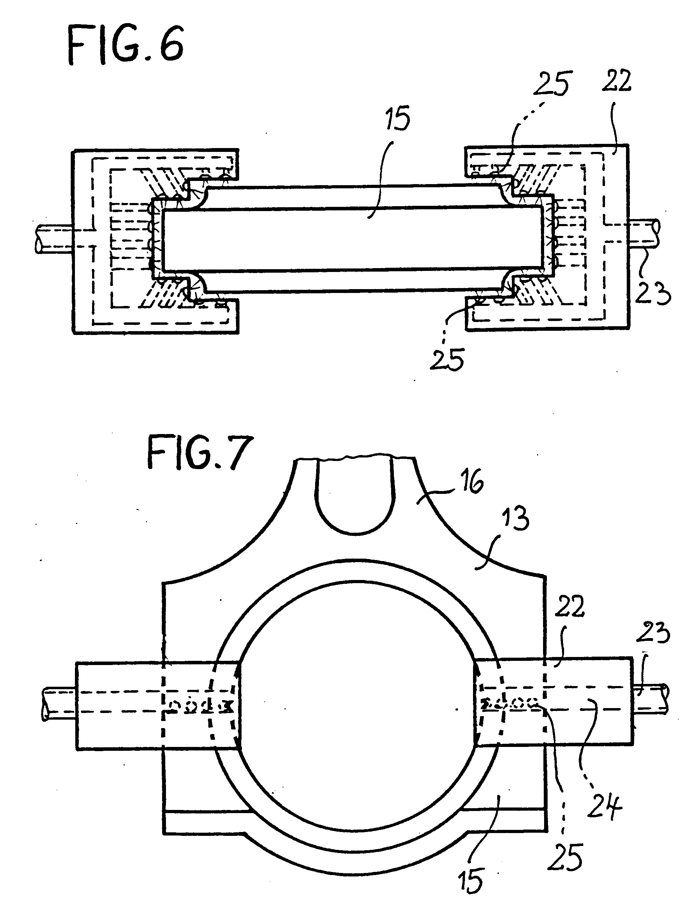

Der in Fig. 6 dargestellte Pleuelkopf mit dem Lagerdeckel 15 ist von einer Kühlvorrichtung 22 umgeben. Diese Kühlvorrichtung 22 weist einen Zulauf 23 für das Kühlmittel auf. An den Zulauf 23 schließen sich gestrichelt dargestellte Kanäle 24 an, die in Sprühdüsen 25 enden.

EP 0 330 830 B1

**Patentansprüche**

1. Verfahren zur Herstellung pulvergeschmiedeter Bauteile, die aus zumindest zwei Einzelteilen bestehen, wobei das Bauteil von einer einteiligen Vorform zur Endform aus Pulver gepreßt, gesintert, geschmiedet, abgekühlt und in seine Einzelteile getrennt wird,
dadurch **gekennzeichnet**, daß die Vorform vor dem Sintern an der Trennstelle zwischen zwei Einzelteilen mit zumindest einer Anrißkerbe (11) versehen wird, die zwischen Sintern und Schmieden eine Schutzschicht, insbesondere eine Oxidschicht, erhält und beim Schmieden zur Endform geschlossen wird, worauf das Bauteil nach dem Abkühlen durch Bruch in seine Einzelteile getrennt wird.

2. Verfahren nach Anspruch 1, dadurch gekennzeichnet, daß außerdem im Bereich der gewünschten Trennfläche und im Abstand von der Anrißkerbe (11) zumindest eine Rißverlaufskerbe (19) vorgesehen wird.

3. Verfahren nach Anspruch 1 oder 2, dadurch gekennzeichnet, daß die Vorform beim Pressen mit zumindest einer Anriß- (11) bzw. einer Rißverlaufskerbe (19) versehen wird.

4. Verfahren nach Anspruch 1 oder 2, dadurch gekennzeichnet, daß die Vorform durch mechanische Bearbeitung mit zumindest je einer Anriß- (11) bzw. Rißverlaufskerbe (19) versehen wird.

5. Verfahren nach einem der vorstehenden Ansprüche, dadurch gekennzeichnet, daß die Vorform vor dem Sintern ausgewogen wird.

6. Verfahren nach einem der vorstehenden Ansprüche, dadurch gekennzeichnet, daß das Gleitmittel ausgebrannt wird und die Sinterung unter Schutzgas erfolgt.

7. Verfahren nach einem der vorstehenden Ansprüche, dadurch gekennzeichnet, daß nach dem Sintern Vorform und Anrißkerbe (11) beim Verbringen zum Schmieden eine Schutzschicht, insbesondere eine Oxidschicht durch die Luftatmosphäre, erhalten.

8. Verfahren nach einem der vorstehenden Ansprüche, dadurch gekennzeichnet, daß beim Schmieden die Anrißkerbe (11) geschlossen und von der Kerbstelle ausgehend längs ihrer Schutzschicht, insbesondere ihrer Oxidschicht, ein in Länge und Lage definierter Riß in der Trennstelle erzeugt wird.

9. Verfahren nach einem der vorstehenden Ansprüche, dadurch gekennzeichnet, daß die Vorform mit Sinterhitze geschmiedet wird.

10. Verfahren nach einem der vorstehenden Ansprüche, dadurch gekennzeichnet, daß das Bauteil durch Luft, Öl oder Schutzgas abgekühlt wird.

11. Verfahren nach einem der vorstehenden Ansprüche, dadurch gekennzeichnet, daß zwischen zwei benachbarten Einzelteilen durch Bruch eine Trennfläche erzeugt wird.

12. Verfahren nach einem der vorstehenden Ansprüche, dadurch gekennzeichnet, daß die Temperatur des Bauteils beim Trennen höchstens gleich der Raumtemperatur ist.

13. Verfahren nach einem der vorstehenden Ansprüche, dadurch gekennzeichnet, daß die gewünschte Trennfläche vor dem Trennen zumindest teilweise gekühlt (Kühlvorrichtung 22) wird.

14. Verfahren nach Anspruch 13, dadurch gekennzeichnet, daß die Außenseiten der gewünschten Trennfläche zumindest teilweise einem strömungsfähigen Kühlmittel ausgesetzt werden.

15. Verfahren nach Anspruch 14, dadurch gekennzeichnet, daß die gewünschte Trennfläche einem flüssigen Gas, vorzugsweise Stickstoff, ausgesetzt wird.

16. Verfahren nach einem der vorstehenden Ansprüche, dadurch gekennzeichnet, daß die Trennung mit hoher Geschwindigkeit erfolgt.

17. Verfahren zur Herstellung eines Pleuels mit geteiltem Pleuelkopf nach einem der vorstehenden Ansprüche, dadurch gekennzeichnet, daß nach dem Abkühlen des Pleuels im Pleuelkopf die Löcher (20) für die Pleuelschrauben (17) angefertigt werden.

18. Verfahren nach Anspruch 17, dadurch gekennzeichnet, daß die Rißverlaufskerbe (19) bei der Herstellung der Löcher (20) für die Pleuelschrauben (17) an den Wandungen der Löcher (20) in der Trennfuge (12) des Pleuelkopfes (13) ausgebildet werden.

19. Verfahren nach Anspruch 18, dadurch gekennzeichnet, daß die Rißverlaufskerben (19) als Ringnut beim oder nach dem Bohren der Löcher (20) hergestellt werden.

20. Verfahren nach Anspruch 18, dadurch gekennzeichnet, daß die Rißverlaufskerben (19) bei oder nach dem Schneiden der Gewinde (21) für die Pleuelschrauben (17) hergestellt werden.

21. Verfahren nach einem der Ansprüche 17 bis 20, dadurch gekennzeichnet, daß die Pleuelschrauben (17) und Pleuelmuttern lose in den Löchern (20) montiert und anschließend die Trennfläche in der Trennfuge (12) des Pleuelkopfes (13) durch Bruchtrennung erzeugt wird.

22. Verfahren nach Anspruch 21, dadurch gekennzeichnet, daß ein Trennwerkzeug in den Pleuelkopf (13) eingeführt wird.

23. Verfahren nach einem der Ansprüche 18 bis 20, dadurch gekennzeichnet, daß eine Trennvorrichtung in die Löcher (20) für die Pleuelschrauben (17) eingeführt wird.

5

24. Verfahren nach einem der Ansprüche 17 bis 23, dadurch gekennzeichnet, daß die spanende Nachbearbeitung des Pleuels, insbesondere des Lagers des Pleuelkopfes (13) und des Pleuelauges, nach dem Trennen erfolgt.

25. Verfahren nach Anspruch 24, dadurch gekennzeichnet, daß vor der spanenden Nachbearbeitung des Pleuelkopfes Pleuelschrauben (17) und Pleuelmuttern fest montiert werden.

## Claims

1. A process for producing powder-forged components which consist of at least two individual parts, in which the component is pressed from a one-piece preform into the final form from powder, is sintered, forged, cooled and separated into its individual parts,
characterised in that the preform is provided with at least one initial crack notch (11) at the point of separation between two individual parts before sintering, which notch is given a protective layer, in particular an oxide layer, between the sintering and forging operations, and during the forging is closed into the final form, whereupon the component is separated into its individual parts by breaking after cooling.

2. A process according to Claim 1, characterised in that furthermore at least one crack path notch (19) is provided in the region of the desired parting plane and at a distance from the initial crack notch (11).

3. A process according to Claim 1 or 2, characterised in that the preform during pressing is provided with at least one initial crack notch (11) or one crack path notch (19).

4. A process according to Claim 1 or 2, characterised in that the preform is provided with at least one initial crack notch (11) and crack path notch (19) each by machining.

5. A process according to one of the preceding Claims, characterised in that the preform is balanced before sintering.

6. A process according to one of the preceding Claims, characterised in that the mould release agent is burned out and the sintering takes place under protective gas.

7. A process according to one of the preceding Claims, characterised in that after sintering the preform and the initial crack notch (11) are given a protective layer, in particular an oxide layer through the air atmosphere, during transfer for forging.

8. A process according to one of the preceding Claims, characterised in that during forging the initial crack notch (11) is closed and, starting from the notch location, a crack which is defined in length and position is produced in the point of separation along its protective layer, in particular its oxide layer.

9. A process according to one of the preceding Claims, characterised in that the preform is forged with sintering heat.

10. A process according to one of the preceding Claims, characterised in that the component is cooled by air, oil or protective gas.

11. A process according to one of the preceding Claims, characterised in that a parting plane is produced between two adjacent individual parts by breaking.

12. A process according to one of the preceding Claims, characterised in that the temperature of the component during separation is at most equal to the room temperature.

13. A process according to one of the preceding Claims, characterised in that the desired parting plane is at least partly cooled (cooling device 22) before separation.

14. A process according to Claim 13, characterised in that the outsides of the desired parting plane are at least partly exposed to a fluid coolant.

15. A process according to Claim 14, characterised in that the desired parting plane is exposed to a liquid gas, preferably nitrogen.

16. A process according to one of the preceding Claims, characterised in that the separation takes place at high speed.

17. A process for producing a connecting-rod with a divided connecting-rod head according to one of the preceding Claims, characterised in that after the connecting-rod has been cooled the holes (20) for the connecting-rod bolts (17) are made in the connecting-rod head.

18. A process according to Claim 17, characterised in that the crack path notches (19) are formed, during the production of the holes (20) for the connecting-rod bolts (17), on the walls of the holes (20) in the separating line (12) of the connecting-rod head (13).

19. A process according to Claim 18, characterised in that the crack path notches (19) are produced as an annular groove during or after the boring of the holes (20).

20. A process according to Claim 18, characterised in that the crack path notches (19) are produced during or after the cutting of the thread (21) for the connecting-rod bolts (17).

21. A process according to one of Claims 17 to 20, characterised in that the connecting-rod bolts (17) and connecting-rod nuts are inserted loosely in the holes (20) and then the parting plane is produced in the separating line (12) of the connecting-rod head (13) by break severing.

22. A process according to Claim 21, characterised in that a parting tool is introduced into the connecting-rod head (13).

23. A process according to one of Claims 18 to 20, characterised in that a parting device is introduced into the holes (20) for the connecting-rod bolt (17).

24. A process according to one of Claims 17 to 23, characterised in that the finish-machining of the connecting-rod, in particular of the bearing of the connecting-rod head (13) and of the connecting-rod eye, takes place after separation.

25. A process according to Claim 24, characterised in that the connecting-rod bolts (17) and connecting-rod nuts are mounted fixedly before the finish-machining of the connecting-rod head (13).

## Revendications

1. Procédé de fabrication, par forgeage de poudre, d'éléments de construction qui sont constitués d'au moins deux pièces individuelles, procédé dans lequel, en passant d'une préforme, en une seule pièce, à la forme finale, on presse l'élément de construction à partir d'une poudre, on le fritte, on le forge, on le refroidit et on le sépare en ses pièces individuelles,
procédé caractérisé par le fait qu'avant le frittage on munit l'emplacement de séparation, entre deux pièces individuelles, d'au moins une entaille (11) d'amorçage de fissure qui, entre le frittage et le forgeage, reçoit une couche de protection, en particulier une couche d'oxyde, et, lors du forgeage, se ferme pour donner la forme finale, après quoi, après refroidissement, on sépare l'élément de construction en ses pièces individuelles par rupture.

2. Procédé selon la revendication 1, caractérisé par le fait qu'en outre, on prévoit, dans la zone de la surface de séparation désirée et à une certaine distance de l'entaille (11) d'amorçage de la fissure, au moins une entaille (19) définissant l'allure de la fissure.

3. Procédé selon la revendication 1 ou 2, caractérisé par le fait que, lors du pressage, on munit la préforme d'au moins une entaille (11) d'amorçage de la fissure ou d'une entaille (19) définissant l'allure de la fissure.

4. Procédé selon la revendication 1 ou 2, caractérisé par le fait que, par usinage mécanique, on munit la préforme d'au moins respectivement une entaille (11) d'amorçage de la fissure ou une entaille (19) définissant l'allure de la fissure.

5. Procédé selon l'une des revendications précédentes, caractérisé par le fait qu'avant le frittage on pèse la préforme.

6. Procédé selon l'une des revendications précédentes, caractérisé par le fait que le lubrifiant se consume et que le frittage se fait sous gaz de protection.

7. Procédé selon l'un des revendications précédentes, caractérisé par le fait que la préforme et l'entaille (11) d'amorçage de la fissure reçoivent après le frittage, lors du déplacement vers le forgeage, une couche de protection, en particulier une couche d'oxyde de la part de l'atmosphère.

8. Procédé selon l'une des revendications précédentes, caractérisé par le fait que lors du forgeage l'entaille (11) d'amorçage de la fissure se ferme et qu'en partant de l'emplacement de la rainure, le long de sa couche de protection, en particulier de sa couche d'oxyde, on produit à l'emplacement de séparation une fissure définie en longueur et en position.

9. Procédé selon l'une des revendications précédentes, caractérisé par le fait que l'on forge la préforme avec la chaleur du frittage.

10. Procédé selon l'une des revendications précédentes, caractérisé par le fait que l'on refroidit l'élément de construction à l'air, à l'huile ou à un gaz de protection.

11. Procédé selon l'une des revendications précédentes, caractérisé par le fait qu'entre deux pièces individuelles voisines, on produit par rupture une surface de séparation.

12. Procédé selon l'une des revendications précédentes, caractérisé par le fait que lors de la séparation, la température de l'élément de construction est au maximum égale à la température ambiante.

13. Procédé selon l'une des revendications précédentes, caractérisé par le fait qu'avant la séparation on refroidit au moins partiellement (dispositif de refroidissement 22) la surface de séparation désirée.

14. Procédé selon la revendication 13, caractérisé par le fait que l'on expose au moins partiellement les faces extérieures de la surface de séparation désirée à un réfrigérant fluide.

15. Procédé selon la revendication 14, caractérisé par le fait que l'on expose la surface de séparation désirée à un gaz liquéfié, en particulier à l'azote.

16. Procédé selon l'une des revendicatioins précédentes, caractérisé par le fait que la séparation se fait à grande vitesse.

17. Procédé de fabrication d'une bielle avec tête de bielle séparée, selon l'une des revendications précédentes, caractérisé par le fait qu'après le refroidissement de la bielle on usine dans la tête de bielle les trous (20) pour les boulons de tête de bielle (17).

18. Procédé selon la revendication 17, caractérisé par le fait que lors de la fabrication des troux (20) pour les boulons de de tête de bielle (17), on forme, sur les parois des trous (20), dans le joint de séparation (12) de la tête de bielle (13), l'entaille (19) définissant l'allure de la fissure.

19. Procédé selon la revendication 18, caractérisé par le fait que l'on réalise les entailles (19) définissant l'allure de la fissure sous forme de rainure annulaire lors du perçage des trous (20) ou après ce perçage.

20. Procédé selon la revendication 18, caractérisé par le fait que l'on réalise les entailles (19) définissant l'allure de la fissure lors de la taille des taraudages (21) pour les boulons de tête de bielle (17) ou après cette taille.

21. Procédé selon l'une des revendications 17 à 20, caractérisé par le fait que l'on monte dans les trous (20), sans les serrer, les boulons de tête de bielle (17) et écrous de tête de bielle et qu'ensuite on produit la surface de séparation dans le joint de séparation (12) de la tête de bielle (13) par séparation par rupture.

22. Procédé selon la revendication 21, caractérisé par le fait que l'on introduit un outil de séparation dans la tête de bielle (13).

23. Procédé selon l'une des revendications 18 à 20, caractérisé par le fait que l'on introduit un dispositif de séparation dans les trous (20) prévus pour les boulons de tête de bielle (17).

24. Procédé selon l'une des revendications 17 à 23, caractérisé par le fait que l'on procède, après la séparation, à la reprise d'usinage, avec enlèvement de copeaux, de la bielle, en particulier de la portée de la tête de bielle (13) et de l'oeil de bielle.

25. Procédé selon la revendication 24, caractérisé par le fait qu'avant la reprise d'usinage, avec enlèvement de copeaux, de la tête de bielle, on monte, de façon fixe, les boulons de tête de bielle (17) et les écrous de tête de bielle.

FIG. 1

FIG. 2

FIG. 3

FIG. 4

FIG. 5

# FIG.6

# FIG.7